(19) Europäisches Patentamt
European Patent Office
Office européen des brevets

(11) EP 0 531 820 B1

# (12) EUROPÄISCHE PATENTSCHRIFT

(45) Veröffentlichungstag und Bekanntmachung des Hinweises auf die Patenterteilung:
**09.07.1997 Patentblatt 1997/28**

(51) Int. Cl.⁶: **C08G 18/80**, C08G 18/28, C08G 18/08, C09J 175/00, C09D 175/00

(21) Anmeldenummer: **92114682.5**

(22) Anmeldetag: **28.08.1992**

## (54) Polyisocyanatgemische, ein Verfahren zu ihrer Herstellung und ihre Verwendung

Polyisocyanate mixtures, process for their preparation and their use

Mélanges de polyisocyanate, procédé de leur préparation et leur utilisation

(84) Benannte Vertragsstaaten:
**DE FR GB IT**

(30) Priorität: **10.09.1991 DE 4129953**

(43) Veröffentlichungstag der Anmeldung:
**17.03.1993 Patentblatt 1993/11**

(73) Patentinhaber: **BAYER AG**
**51368 Leverkusen (DE)**

(72) Erfinder: **Reiff, Helmut, Dr.**
**W-5090 Leverkusen 1 (DE)**

(56) Entgegenhaltungen:
**EP-A- 0 433 776**
**DE-A- 1 922 626**
**FR-A- 2 370 762**
**US-A- 2 968 672**
**US-A- 3 801 272**
**US-A- 4 258 140**

EP 0 531 820 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Rank Xerox (UK) Business Services
2.14.10/3.4

## Beschreibung

Die Erfindung betrifft neue Gemische von basischen (tertiären) und/oder quartären, Stickstoff aufweisenden Polyisocyanaten einer mittleren NCO-Funktionalität von 2,3 bis 4,3, ein Verfahren zur Herstellung derartiger Gemische und ihre Verwendung als Ausgangsmaterial bei der Herstellung von Polyurethankunststoffen bzw. als Vernetzer für wäßrige, polymere Bindemittel.

Die Bedeutung wäßriger Bindemittel für Beschichtungen jedweder Art steigt ständig an aufgrund strengerer Emissionsrichtlinien und ökologischer Argumente.

Zwar gibt es bereits eine Fülle von wäßrigen Bindemitteln mit hohem Qualitätsniveau, oftmals sind aber optimale Eigenschaften nur durch eine chemische Nachvernetzung während oder nach der Filmbildung zu erreichen.

Die US-PS 2 968 672 betrifft Polyisocyanate mit tertiären Stickstoffatomen, die durch Umsetzung von propoxyliertem Ethylendiamin mit Hexamethylendiisocyanat, Toluylendiisocyanat oder Phenylendiisocyanat hergestellt werden. Das einzige Beispiel, in dem ein Polyisocyanat mit aliphatisch gebundenen Isocyanatgruppen verwendet wird, ist Beispiel VI. Weder dieses Beispiel VI noch die Beschreibung der US-PS 2 968 672 erwähnt Polyisocyanat-Ausgangskomponenten mit einer NCO-Funktionalität über 2. Im Gegensatz dazu entstehen durch die Verwendung höherfunktioneller Polyisocyanat-Ausgangskomponenten A Produkte, die Verzweigungsstellen an den Punkten aufweisen, an denen höherfunktionelle Polyisocyanate eingebaut worden sind.

Die DE-OS 19 22 626 betrifft tertiäre Stickstoffatome enthaltende Polyisocyanate, die aufgrund der eingebauten Polyethergruppen sehr geringe Mengen an tertiärem Stickstoff enthalten. Deshalb sind die Produkte in Wasser nicht dispergierbar; folgerichtig werden in den Beispielen auch größere Mengen organischer Lösungsmittel eingesetzt. Die Polyisocyanate der DE-OS 19 22 626 sind feuchtigkeitsvernetzend und eignen sich daher als Einkomponenten-Bindemittel für Anstrichsysteme.

Aromatische, hydrophil modifizierte Polyisocyanate, wie sie z.B. in der DE-OS 2 359 613 und der EP-A-61 628 beschrieben werden, sind aufgrund ihrer hohen Reaktivität gegenüber Wasser und der damit verbundenen Kohlendioxid-Entwicklung zum Einsatz in wäßrigen Bindemittelsystemen nicht gut geeignet. Sie finden bevorzugt bei der Schaumstoff-Herstellung und auf dem Klebstoffsektor Verwendung. Isocyanat-funktionelle Vernetzer für wäßrige Beschichtungssysteme sind ausschließlich auf Basis der weniger reaktiven (cyclo)aliphatischen Polyisocyanate herstellbar.

In der EP-A-206 059 werden hydrophil modifizierte, aliphatische Polyisocyanate als Zusatzmittel für wäßrige Klebstoffe beschrieben. Die Emulgierbarkeit dieser Polyisocyanate wird durch den Einbau Ethylenoxideinheiten aufweisender Polyetherketten erreicht. Für einige Anwendungen sind derart hydrophilierte Polyisocyanate aufgrund der durch den relativ hohen Polyethergehalt verursachten, bleibenden Hydrophilie der Beschichtung jedoch nur bedingt geeignet.

Die der vorliegenden Erfindung zugrundeliegende Aufgabe bestand darin, tert. Stickstoff aufweisende neue Polyisocyanate einer (mittleren) NCO-Funktionalität von 2,3 bis 4,3 zur Verfügung zu stellen, die trotz des Vorliegens von tert. Stickstoff und Isocyanatgruppen im gleichen Molekül lagerstabil sind, sich ohne Schwierigkeiten, gegebenenfalls nach zumindest teilweiser Alkylierung oder Protonierung, in Wasser lösen oder dispergieren lassen und als Ausgangskomponenten bei der Herstellung von Polyurethankunststoffen und vor allem als Vernetzer für wäßrige Bindemittel oder Bindemittelkomponenten geeignet sind.

Diese Aufgabe konnte mit der Bereitstellung der nachstehend näher beschriebenen Polyisocyanatgemische bzw. des Verfahrens zu ihrer Herstellung gelöst werden.

Gegenstand der Erfindung sind Polyisocyanatgemische, gekennzeichnet durch

a) eine mittlere NCO-Funktionalität von 2,3 bis 4,3,

b) einen Gehalt an (cyclo)aliphatisch gebundenen Isocyanatgruppen (berechnet als NCO, Molekulargewicht = 42) von 10,0 bis 20,5 Gew.-%,

c) einen Gehalt an eingebautem, tertiärem Stickstoff von 5 bis 250 Milläquivalenten pro 100 g, vorzugsweise 15 bis 100,

d) einen Gehalt an innerhalb von Polyetherketten angeordneten Ethylenoxideinheiten (berechnet als $C_2H_4O$, Molekulargewicht = 44) von 0 bis 15 Gew.-%,

hergestellt unter Verwendung

A) einer Polyisocyanatkomponente mit einer (mittleren) NCO-Funktionalität von mindestens 2,1, bestehend aus mindestens einem Polyisocyanat mit ausschließlich (cyclo)aliphatisch gebundenen Isocyanatgruppen und

B) einer Modifizierungskomponente bestehend aus einer mindestens einen tert. Stickstoff und mindestens einer

gegenüber Isocyanaten reaktiven Gruppe enthaltenden Verbindung.

Gegenstand der Erfindung ist auch ein Verfahren zur Herstellung dieser Polyisocyanatgemische, welches dadurch gekennzeichnet ist, daß man

A) eine Polyisocyanatkomponente mit einer (mittleren) NCO-Funktionalität von mindestens 2,1, bestehend aus mindestens einem Polyisocyanat mit ausschließlich (cyclo)aliphatisch gebundenen Isocyanatgruppen mit

B) einer Modifizierungskomponente, bestehend aus einer mindestens einen tert. Stickstoff und mindestens einer gegenüber Isocyanaten reaktiven Gruppe enthaltenden Verbindung,.
sowie gegebenenfalls

C) einer Polyetheralkohol-Komponente mit einem Gehalt an innerhalb von Polyetherketten eingebauten Ethylenoxideinheiten von mindestens 50 Gew.-%, bestehend aus mindestens einem Polyetheralkohol des Molekulargewichts 350 bis 3500,
und/oder gegebenenfalls

D) weiteren, von den Komponenten B) und C) verschiedenen Polyhydroxylverbindungen,

unter Einhaltung eines NCO/OH-Äquivalentverhältnisses von 2:1 bis 75:1 umsetzt, wobei im übrigen Art und Mengenverhältnisse der genannten Ausgangskomponenten so gewählt werden, daß die resultierenden Umsetzungsprodukte den oben unter a) bis d) genannten Bedingungen entsprechen.

Gegenstand der Erfindung ist auch die Verwendung dieser Polyisocyanatgemische, gegebenenfalls in zumindest teilweise alkylierter bzw. protonierter Form als Ausgangskomponente bei der Herstellung von Polyurethankunststoffen.

Gegenstand der Erfindung ist schließlich auch die Verwendung dieser Polyisocyanatgemische, gegebenenfalls in zumindest teilweise alkylierter bzw. protonierter Form als Vernetzer für wasserlösliche oder -dispergierbare Bindemittel oder Bindemittelkomponenten bei der Herstellung von Verklebungen, Überzügen und Beschichtungsmitteln aller Art unter Verwendung von wäßrigen Beschichtungsmitteln auf Basis derartiger Bindemittel oder Bindemittelkomponenten.

Die beim erfindungsgemäßen Verfahren einzusetzende Komponente A) weist eine (mittlere) NCO-Funktionalität von mindestens 2,1, vorzugsweise von mindestens 2,8 auf. Sie besteht aus mindestens einem organischen Polyisocyanat mit ausschließlich (cyclo)aliphatisch gebundenen Isocyanatgruppen. Es handelt sich bei den Polyisocyanaten bzw. Polyisocyanatgemischen der Komponente A) um beliebige, durch Modifizierung einfacher (cyclo)aliphatischer Diisocyanate hergestellte Polyisocyanate mit Uretdion- und/oder Isocyanurat-, Urethan- und/oder Allophanat-, Biuret- oder Oxidazinstruktur, wie sie beispielsweise in den DE-OS'en 1 670 666, 3 700 209 und 3 900 053 oder EP-A-336 205 oder EP-A-339 396 beispielhaft beschrieben sind. Geeignete Diisocyanate zur Herstellung solcher Polyisocyanate sind grundsätzlich solche des Molekulargewichtsbereichs 140 bis 400 mit (cyclo)aliphatisch gebundenen Isocyanatgruppen, wie z.B. 1,4-Diisocyanatobutan, 1,6-Diisocyanatohexan, 1,5-Diisocyanato-2,2-dimethylpentan, 2,2,4- bzw. 2,4,4-Trimethyl-1 ,6-diisocyanatohexan, Lysindiisocyanat, die isomeren perhydro-Xylylendiisocyanate, 1,10-Diisocyanatodecan, 1,3- und 1,4-Diisocyanatocyclohexan, 1-Isocyanato-3,3,5-trimethyl-5-isocyanatomethylcyclohexan (Isophorondiisocyanat) und 4,4-Diisocyanatodicyclohexylmethan oder beliebige Gemische solche Diisocyanate. Besonders bevorzugt handelt es sich bei der Ausgangskomponente A) um im wesentlichen aus trimerem 1,6-Diisocyanatohexan bestehenden, Isocyanatgruppen aufweisenden Polyisocyanaten, wie sie durch an sich bekannte, katalytische Trimerisierung und unter Isocyanuratbildung von 1,6-Diisocyanatohexan erhalten werden, die vorzugsweise einen NCO-Gehalt von 19 bis 24 Gew.-% und eine (mittlere) NCO-Funktionalität von 3,4 bis 4,4 aufweisen.

Bei den Modifizierungsmitteln B) handelt es sich um Komponenten, bestehend aus einer mindestens einen tertiären Stickstoff und mindestens einer gegenüber Isocyanaten reaktiven Gruppe enthaltenden Verbindungen.

Diese Moleküle enthalten also neben mindestens einem basischen Stickstoff noch mindestens eine Zerewitinow-aktive Gruppe wie beispielsweise -OH, -SH oder -NHR-Gruppe.

Geeignete Modifizierungsmittel B) sind beispielsweise entsprechend substituierte Morpholine, Piperidine, Piperazine, Oxazoline, Dihydrooxazine usw. aber auch primär-tertiäre Diamine und sekundär-tertiäre Diamine sowie tert. Stickstoff enthaltende Aminoalkohole jedweder Art.

Ausgewählte, erfindungsgemäß zu verwendende Modifizierungsmittel B) sind beispielsweise:

N-(2-Hydroxyethyl)-piperidin,
N-(2-Hydroxypropyl)-piperidin,
N-(2-Hydroxyethyl)-morpholin,
N-(2-Hydroxypropyl)-morpholin,
N-Methyl-piperazin,
N-Methyl-N'-hydroxyethyl-piperazin,

N-Methyl-N'-2-hydroxypropyl-piperazin,
N-Methyl-N'-4-hydroxybutyl-piperazin,
2-Hydroxyethyl-oxazolin,
2-Hydroxypropyl-oxazolin,
3-Hydroxypropyl-oxazolin,
2-Hydroxyethyl-dihydrooxazin,
2-Hydroxypropyl-dihydrooxazin,
3-Hydroxypropyl-dihydrooxazin.

Geeignete Ausgangsprodukte B) für das erfindungsgemäße Verfahren sind weiterhin primär-tertiäre Diamine der Formel (I), worin R eine $C_2$-$C_{10}$-Alkylengruppe darstellt, die linear oder verzweigt sein kann, vorzugsweise $C_2$- bis $C_8$-Alkylen, besonders bevorzugt $C_2$- bis $C_6$-Alkylen; $R_1$ und $R_2$ $C_1$- bis $C_5$-Alkyl oder zusammen mit dem N-Atom einen 5- oder 6-Ring, der gegebenenfalls ein O-Atom enthalten kann, bevorzugt $C_1$-$C_4$-Alkyl, $-(CH_2)_4$, $-(CH_2)_5$, $-(CH_2CH_2)_2O$, besonders bevorzugt $CH_3$, $C_2H_5$, $(CH_2)_5$, $(CH_2)_5$ und $-(CH_2CH_2)_2O$,

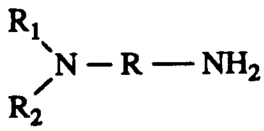

(I)

sowie $NHR_3$
wobei $R_3$ die gleiche Bedeutung wie $R_1$ bzw. $R_2$ besitzt.

Genannt seien beispielsweise:

$(CH_3)_2N-(CH_2)_2-NH_2$, $(C_2H_5)_2N-(CH_2)_2-NH_2$, 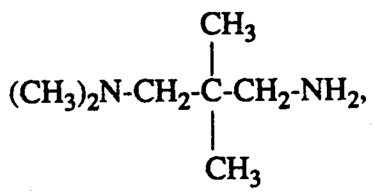

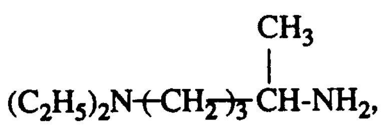, $(CH_3)_2N-(CH_2)_3-NH_2$, 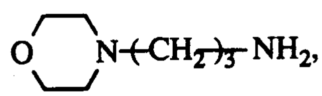

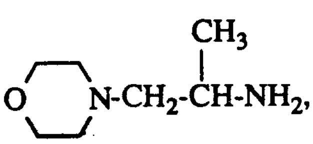, 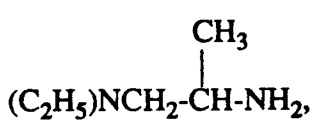, 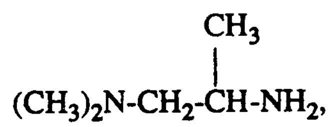

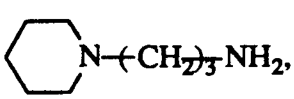, 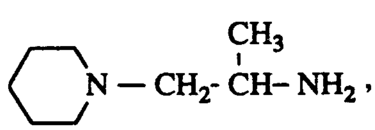, 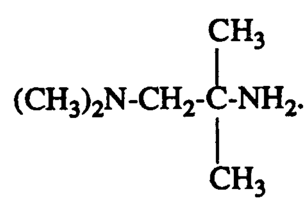.

Geeignete Ausgangsprodukte bzw. Modifizierungsmittel sind ferner tert. Aminoalkohole der Formel (II)

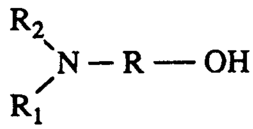

(II)

in der

R, $R^1$ und $R^2$ die oben angegebene Bedeutung haben.
Genannt seien beispielhaft:

N,N-Diethyl-ethanolamin,
N,N-Diethyl-propanolamin,
N,N-Dimethyl-ethanolamin,
N,N-Dimethyl-propanolamin,
N,N-Dibutyl-ethanolamin,
N,N-Dibutyl-propanolamin.

Auch die Alkoxylierungsprodukte dieser Aminoalkohole können erfindungsgemäß eingesetzt werden, beispielsweise indem man N,N-Dibutylethanolamin mit Ethylenoxid und/oder Propylenoxid auf ein Molekulargewicht von beispielsweise 650 g/Mol alkoxyliert.

Die Modifizierungsmittel B) können auch entweder mehr als einen tert. Stickstoff und/oder mehr als eine Zerewitinow-aktive Gruppe enthalten.

Bei der gegebenenfalls einzusetzenden Ausgangskomponente C) handelt es sich um innerhalb von Polyetherketten eingebaute Ethylenoxideinheiten aufweisende Polyetheralkohole mit einem Ethylenoxidgehalt von mindestens 50 Gew.-%. Solche Verbindungen stellen beispielsweise Alkoxylierungsprodukte ein- oder mehrwertiger Startermoleküle dar, wie sie in der EP-A-206 059, Seite 8, Zeile 26 bis Seite 9, Zeile 17 beschrieben sind. Bei Mitverwendung solcher nichtionischer, hydroxyfunktioneller Emulgatoren werden diese jedoch in so geringer Menge eingesetzt, daß durch sie alleine noch keine ausreichende Wasserdispergierbarkeit erreicht wird.

Bei der außerdem gegebenenfalls mitzuverwendenden Ausgangskomponente D) handelt es sich um Hydroxylgruppen aufweisende Verbindungen, vorzugsweise Polyhydroxyverbindungen des Molekulargewichtsbereichs 62 bis 200, die von den Verbindungen B) und C) verschieden sind. Beispielhaft genannt seien Ethylenglykol, Propylenglykol, Glycerin, Trimethylolpropan, Pentaerythrit oder beliebige Gemische derartiger mehrwertiger Alkohole.

Zur Durchführung des erfindungsgemäßen Verfahrens werden die Ausgangsverbindungen bei Temperaturen von 10 bis 100°C, vorzugsweise 20 bis 80°C, unter Einhaltung eines NCO/OH-Äquivalentverhältnisses von 2:1 bis 75:1, vorzugsweise 5:1 bis 20:1 vorzugsweise bis zum Erreichen des theoretisch errechneten NCO-Gehaltes miteinander umgesetzt. Dabei wird die Reaktionstemperatur in Abhängigkeit von der Reaktivität der eingesetzten Modifizierungsmittel B) so niedrig gewählt, daß Nebenreaktionen ausgeschlossen sind. Im übrigen werden Art und Mengenverhältnisse der Ausgangskomponenten im Rahmen der gemachten Angaben so gewählt, daß die resultierenden Umsetzungsprodukte

a) eine mittlere NCO-Funktionalität von 2,3 bis 4,3,

b) einen NCO-Gehalt von 10,0 bis 20,5, vorzugsweise von 15,0 bis 20,0 Gew.-%,

c) einen Gehalt an chemisch eingebautem tertiärem Stickstoff von 15 bis 250 Milliäquivalenten pro 100 g, vorzugsweise 15 bis 100,

d) einen Gehalt an innerhalb von Polyetherketten eingebauten Ethylenoxideinheiten von 0 bis 15, vorzugsweise von 1 bis 5 Gew.-%.

Die gemachten Angaben bezüglich der NCO-Funktionalität der Verfahrensprodukte beziehen sich auf den Wert der rechnerisch aus Art und Funktionalität der Ausgangskomponente nach der Formel

$$f = \frac{\Sigma \text{val NCO} - \Sigma \text{val OH}}{\Sigma \text{mol (NCO+OH)} - \Sigma \text{val OH}}$$

errechnen läßt.

Die gemachten Angaben bezüglich des Gehalts an basischem Stickstoff und Isocyanatgruppen beziehen sich auf die titrimetrisch bestimmbaren Werte.

Die Umsetzung wird vorzugsweise, jedoch nicht zwingendermaßen lösungsmittelfrei durchgeführt; gegebenenfalls können geeignete, gegenüber Isocyanatgruppen inerte Lösemittel mitverwendet werden. Geeignete Lösemittel sind z.B. Ethylacetat, Butylacetat, Ethylenglykolmonomethyl- oder -ethyletheracetat, 1-Methoxypropyl-2-acetat, Butoxypropyl-2-acetat, 2-Butanon, 4-Methyl-2-pentanon, Cyclohexanon, Toluol, oder deren Gemische, aber auch Lösemittel wie Propylenglykoldiacetat, Diethylenglykoldimethylether, Diethylenglykolethyl- und -butyletheracetat, N-Methylpyrrolidon und N-Methylcaprolactam, oder Gemische solcher Lösemittel.

Die erfindungsgemäßen Verfahrensprodukte stellen klare, praktisch farblose Polyisocyanate der bereits obengenannten Zusammensetzung dar. Lösungen der erfindungsgemäßen Verfahrensprodukte in einem der obengenannten, für das erfindungsgemäße Verfahren geeigneten Lösemittel besitzen bei einem Festkörper-Gehalt von 80 Gew.-% Viskositäten zwischen 1500 und 15.000 mPa.s (23°C).

Die so hergestellten erfindungsgemäßen Polyisocyanatgemische lassen während 90-tägiger Lagerung bei Raumtemperatur keinen nennenswerten Abfall des Isocyanat-Gehaltes erkennen.

Die auf diese Weise erhältlichen, tert. Stickstoff enthaltenden erfindungsgemäßen Polyisocyanate können erfindungsgemäß mit Alkylierungsmitteln der Formel $R_3X$ in die entsprechenden quartären erfindungsgemäßen Polyisocyanate überführt werden.

Geeignete Alkylierungsmittel $R_3X$ sind solche, mit $R_3$ für $C_1$-$C_5$-Alkyl, Allyl, Methallyl oder Benzyl, besonders bevorzugt Methyl, Ethyl, Allyl und Benzyl. X ist der Rest einer starken Säure wie beispielsweise Halogenwasserstoffsäure und Schwefelsäure.

Wichtige Alkylierungsmittel sind beispielsweise Methylchlorid, Methylbromid, Methyliodid, Allylchlorid, Benzylchlorid, Dimethylsulfat usw.

Die Alkylierung wird bei 0 bis 100°C, vorzugsweise bei 10 bis 80°C, vorzugsweise lösemittelfrei durchgeführt.

Man kann die Alkylierung in Substanz oder in geeigneten inerten Lösungsmitteln durchführen. Geeignet sind z.B. Kohlenwasserstoffe wie Hexan, Pentan, Cyclohexan, Benzol, Toluol, Xylol, Halogenkohlenwasserstoffe wie Dichlormethan, Trichlormethan, Dichlorethan, Trichlorethan, Chlorbenzol, Brombenzol, Dichlorbenzol, Ether wie Diethyl-, Diisopropylether, Anisol, Dibutylether, Nitrile wie Acetonitril, Propionitril und Benzonitril. Man kann auch das Alkylierungsmittel als Verdünnungsmittel verwenden, wenn es leicht wiedergewonnen werden kann, z.B. Methylchlorid, Ethylchlorid, Methyliodid oder Propylbromid.

Statt einer Alkylierung kann auch die einfache Protonierung der erfindungsgemäßen tert. Stickstoff enthaltenden Polyisocyanate gewählt werden.

Sie wird bevorzugt mit solchen Säuren durchgeführt, die einen $pK_a$-Wert - gemessen in Wasser - von kleiner als 3, besonders bevorzugt von Kleiner als 2 aufweisen.

Genannt seien z.B. die Halogenwasserstoffsäuren HCl, HBr, HJ, Schwefelsäure, Phosphorsäure, Sulfonsäuren wie Benzol-, Chlorbenzol- und Toluolsulfonsäure und Phosphonsäuren wie Chlorbenzol- oder Cyclobenzolphosphonsäure, ferner Perchlorsäure, Trifluoressigsäure, Methansulfonsäure, Trifluormethansulfonsäure, Milchsäure usw.

Die hervorragende Wasserlöslichkeit bzw. -dispergierbarkeit der erfindungsgemäßen Polyisocyanatgemische in ihrer zumindest teilweise alkylierten und/oder protonierten Form macht die erfindungsgemäßen Polyisocyanate zu gut handhabbaren, wertvollen wäßrigen Vernetzungsmitteln für wäßrige Bindemittel.

Herausragende Vorteile der erfindungsgemäßen Produkte sind:

1) verbesserte Reaktivität gegenüber Hydroxyl- und Polyhydroxyl-Komponenten in 2- und 3-Komponenten Polyurethanen,

2) daher möglicher Verzicht auf Schwermetallkatalysatoren,

3) hervorragende Stabilität der wäßrigen Emulsionen der erfindungsgemäßen Produkte in ihrer zumindest teilweise alkylierten bzw. protonierten Form,

4) daher möglicher Verzicht auf Lösemittel,

5) verringerte bleibende Gesamthydrophilie im Vergleich zu Produkten gemäß dem Stand der Technik,

6) verbesserte Haftung der erfindungsgemäßen Produkte nach zumindest anteiliger Alkylierung bzw. Protonierung.

Die Frage, ob es sich bei den wäßrigen Systemen um Lösungen oder Dispersionen handelt, hängt in erster Linie von der Konzentration an hydrophilen Zentren ab und ist bezüglich der weiteren Verwendbarkeit von untergeordneter

Bedeutung.

Die erfindungsgemäßen Polyisocyanatgemische stellen wertvolle Ausgangsmaterialien zur Herstellung von Polyurethan-Kunststoffen nach dem Isocyanat-Polyadditionsverfahren dar. Auch hierzu werden vorzugsweise wäßrige Lösungen und Dispersionen der zumindest teilweise alkylierten und/oder protonierten Polyisocyanate eingesetzt, die in Kombination mit in Wasser dispergierten Polyhydroxylverbindungen im Sinne von wäßrigen Zweikomponenten-Systemen zur Umsetzung gebracht werden können. Besonders bevorzugt werden die erfindungsgemäßen Polyisocyanatgemische, vorzugsweise in zumindest teilweise alkylierter und/oder protonierter Form, als Vernetzer für in Wasser gelöste oder dispergierte Bindemittel oder Bindemittelkomponenten bei der Herstellung von Beschichtungen oder Verklebungen unter Verwendung von wäßrigen Beschichtungsmitteln auf Basis derartiger Bindemittel bzw. Bindemittelkomponenten verwendet. Die Vereinigung der Vernetzer mit den Bindemitteln bzw. Bindemittelkomponenten kann hierbei durch einfaches Verrühren vor der Verarbeitung der Beschichtungsmittel nach beliebigen Methoden erfolgen. In diesem Zusammenhang seien als Bindemittel oder Bindemittelkomponenten beispielhaft erwähnt: in Wasser dispergierte Polyurethane, die aufgrund der in den Urethangruppen vorliegenden aktiven Wasserstoffatome mit Polyisocyanaten vernetzbar sind; in Wasser gelöste oder dispergierte, Hydroxylgruppen aufweisende Polyacrylate, insbesondere solche des Molekulargewichtsbereichs 1000 bis 100 000, die mit organischen Polyisocyanaten als Vernetzer wertvolle Zweikomponenten-Bindemittel darstellen oder in Wasser dispergierte, gegebenenfalls Urethan-modifizierte, Hydroxylgruppen aufweisende Polyesterharze der aus der Polyester- und Alkydharzchemie bekannten Art.

Im allgemeinen besitzen die mit den erfindungsgemäßen Polyisocyanatgemischen formulierten wäßrigen Bindemittel, denen die üblichen Hilfs- und Zusatzmittel einverleibt werden können, schon bei Raumtemperaturtrocknung gute technische Eigenschaften.

In den nachfolgenden Beispielen beziehen sich alle Prozentangaben, soweit nicht anders vermerkt, auf das Gewicht.

**<u>Ausgangsprodukte, Polyisocyanate</u>**

<u>Polyisocyanat 1</u>

Biuretpolyisocyanat auf Basis von 1,6-Diisocyanatohexan, welches im wesentlichen aus N,N',N''-Tris-(6-isocyanatohexyl)-biuret und dessen höheren Homologen besteht, mit einem NCO-Gehalt von 21,0 %, einem Gehalt an monomerem 1,6-Diisocyanatohexan von <0,5 %, einer Viskosität bei 28°C von 8500 mPa.s und einer mittleren NCO-Funktionalität von ca. 3,3.

<u>Polyisocyanat 2</u>

Durch Trimerisierung eines Teils der Isocyanatgruppen von 1,6-Diisocyanatohexan hergestelltes, Isocyanuratgruppen aufweisendes Polyisocyanat, welches im wesentlichen aus Tris-(6-isocyanatohexyl)-isocyanurat und dessen höheren Homologen besteht, mit einem NCO-Gehalt von 21,6 %, einem Gehalt an monomerem Diisocyanat von <0,3 %, einer Viskosität bei 28°C von 1700 mPa.s und einer mittleren NCO-Funktionalität von ca. 3,3.

<u>Polyisocyanat 3</u>

Durch Trimerisierung von IPDI erhaltenes Isocyanato-Isocyanurat einer mittleren NCO-Funktionalität von ca. 3,3, 70 %ige Lösung in einem aromatischen Kohlenwasserstoffgemisch ®Solvesso 100, NCO-Gehalt der Lösung: 11 %.

<u>Polyisocyanat 4</u>

Bis-(6-isocyanatohexyl)-uretdion mit einem NCO-Gehalt von 21,5 % und einer Viskosität bei 23°C von 80 mPa.s.

**<u>Ausgangsprodukte, Modifizierungsmittel</u>**

| | | |
|---|---|---|
| <u>1</u> | 2-Hydroxyethyl-morpholin | [131] |
| <u>2</u> | 2-Hydroxyethyl-piperidin | [129] |
| <u>3</u> | 2-Hydroxyethyl-pripazin | [130] |
| <u>4</u> | 2-Hydroxyethyl-oxazolin | [115] |
| <u>5</u> | N-Dibutyl-ethanolamin | [173] |

**Ausgangsprodukte, Polyether**

Polyether 1

Auf n-Butanol gestarteter, monofunktioneller Polyethylenoxid-polypropylenoxidpolyether vom Molekulargewicht 2150. Gehalt an Ethylenoxid: 80 %.

Polyether 2

Auf 3-Ethyl-3-hydroxymethyloxetan gestarteter monofunktioneller Polyethylenoxidpolyether vom Molekulargewicht 1210.

Polyether 3

Bifunktioneller, auf Propylenglykol gestarteter Polypropylen-polyethylenoxidpolyether vom Molekulargewicht 2000 (mit 25 % Ethylenoxid).

Polyether 4

Bifunktioneller, auf Ethylenglykol gestarteter Polyethylenoxidpolyether vom Molekulargewicht 1500.

Polyether 5

Bifunktioneller, auf Propylenglykol gestarteter Polypropylenoxidpolyether vom Molekulargewicht 1000.

Ausführungsbeispiel 1

Zu 1000 g Polyisocyanat 2 tropft man bei 45°C innerhalb von 30 Minuten 50 g (0,382 Mole) 2-Hydroxyethylmorpholin. Man erwärmt auf 90°C und hält 1½ Stunden bei dieser Temperatur. Nach Abkühlen auf 60°C fügt man tropfenweise 43,3 g Dimethylsulfat zu. Nach 30 Minuten wird auf Raumtemperatur abgekühlt.

Man erhält ein hellgelbes Harz mit einem NCO-Gehalt von 17,9 Gew.-% und einer Viskosität von 4300 mPa.s. Der Gehalt an quartärem Stickstoff beträgt 32,7 meq/100 g. Eine 25 g-Probe wird in 75 ml Wasser bei Raumtemperatur zu einer feinteiligen Emulsion dispergiert, die länger als 1 Tag lagerstabil ist.

Beispiel 2

Man verfährt völlig analog Beispiel 1, verwendet jedoch lediglich 28,9 g Dimethylsulfat. Das erhaltene Harz hat eine Viskosität von 4400 mPa.s und einen Gehalt an quartärem Stickstoff von nunmehr 21,8 meq/100 g. Man erhält beim Vermischen von 1 Gew.-Teil Harz mit 2 Gew.-Teilen Wasser auf einem Vibrofix-Gerät der Fa. Janke & Kunkel bei 1500 Vibrationen pro Minute eine feinteilige, 24 Stdn. lagerstabile Emulsion.

Beispiele 3 und 4

Man wiederholt das Beispiel 1, nunmehr jedoch ohne Dimethylsulfat. Die Polyisocyanatzubereitung hat eine Viskosität von 4100 mPa.s, einen Gehalt an tertiärem Stickstoff von 36,8 meq/100 g und einen korrigierten NCO-Wert von 18,95 %.

Je 1 Gew.-Teil dieses Harzes wird mit 3 Gew.-Teilen Wasser, enthaltend

im Bsp. 3: 10 Gew.-% Essigsäure und
im Bsp. 3: 10 Gew.-% Milchsäure,

auf dem Vibrofix in eine feinteilige, stundenlang stabile Emulsion überführt.

Beispiele 5 bis 15

Die Herstellung von erfindungsgemäßen Polyisocyanatzubereitungen erfolgt in Analogie zu Beispiel 1. Die Ausgangsmaterialien und die Eigenschaften der resultierenden Polyisocyanat-Zubereitungen sind in der nachstehenden Tabelle 1 zusammengefaßt.

Tabelle 1

| Beispiel # | Polyisocyanat | Modifizierungs- | | Polyol | | NCO-Gehalt [%] | Basenstickstoff meq/100g | Gew.-% Ethylenoxid |
|---|---|---|---|---|---|---|---|---|
| | | Art | Menge/100g | Art | Menge/100g | | | |
| 5 | 1 | 1 | 50 | - | - | 18,2 | 36,4 | - |
| 6 | 2 | 1 | 30 | - | - | 20,1 | 21,6 | - |
| 7 | 2+4* | 1 | 30 | - | - | 19,6 | 21,6 | - |
| 8 | 2+4** | 1 | 30 | - | - | 19,5 | 21,6 | - |
| 9 | 2+4** | 1 | 30 | 1 | 30 | 18,9 | 21,6 | 2,4 |
| 10 | 3 | 1 | 60 | 2 | 60 | 10,9*** | 55,9*** | 5,4 |
| 11 | 2 | 2 | 40 | - | - | 19,4 | 29,8 | 5,5 |
| 12 | 2 | 3 | 40 | - | - | 19,5 | 29,6 | - |
| 13 | 2 | 4 | 40 | 2 | 40 | 18,4 | 32,2 | 3,3 |
| 14 | 2 | 1 | 30 | 3 | 60 | 18,7 | 21,0 | 1,4 |
| 15 | 2 | 1 | 30 | 4 | 60 | 18,7 | 21,2 | 5,6 |

*Verhältnis 60:40
**Verhältnis 40:60
***ber. auf Festkörper,
vorliegend 50%ige Lsg. in Methoxypropylacetat.

Beispiel 16

Das Material aus Beispiel 10 wird in 50 %iger Lösung in Methoxypropylacetat mit (70 % der theoretischen Menge, bezogen auf den tert. Stickstoff) Dimethylsulfat umgesetzt. Reaktionszeit: 30 Minuten bei 50°C. Man erhält eine Klare, hellgelbe Harzlösung mit einem Gehalt an quartärem Stickstoff von 39,1 meq/100 g Festkörper.

1 Gew.-Teil dieser Lösung wird mit 3 Gew.-Teilen Wasser auf Vibrofix in eine feinteilige Emulsion überführt, die länger als 1 Woche lagerstabil ist.

Bei Verwendung von 95 % der theoretischen Menge an Dimethylsulfat unter sonst völlig gleichen Bedingungen (nunmehr 53,1 meq/100 g) erhält man eine noch deutlich feinteiligere, lagerstabile Emulsion.

Beispiel 17

465 g Polyisocyanat 2 werden bei 60°C mit 15 g Polyether 1 versetzt. Nun werden 15,8 g Oxipropylmorpholin langsam zugetropft und der Ansatz 3 Stunden auf 105°C erwärmt.

Man verdünnt mit 41 g Propylenglycolmonomethylether-acetat und tropft nach Abkühlen auf Raumtemperatur 9,5 g Methansulfonsäure, gelöst in 16 g Propylenglycolmonomethylether-acetat, langsam zu.

Man erhält eine 90 %ige Lösung eines erfindungsgemäßen Polyisocyanatgemisches mit einer Viskosität von 1900 mPa.s und einem NCO-Gehalt von 19,3 Gew.-%.

Beispiel 18

150 g trimeres 4,4'-Diisocyanato-dicyclohexylmethan (NCO = 15,25 %) wird bei 60°C in 155 g Propylengylcoldiacetat gelöst, mit 35 g Polyether 2 und 5 g Oxipropylmorpholin versetzt und 1 Stunde bei 100°C gerührt, auf 90°C abgekühlt, mit 1 Tropfen Dibutylzinndilaurat katalysiert und weitere 2 Stunden bei 100°C gerührt. Nach Abkühlen erhält man eine blaßgelbe Harzlösung vom NCO-Gehalt 11,0 % und einem Festkörpergehalt von 55 %. Das Harz enthält 18,2 meq/100 g Basenstickstoff.

Verwendungsbeispiel 1

26,9 g eines trifunktionellen Polyoxypropylenpolyethers vom Molgewicht 445 werden - unter Einhaltung des NCO/OH-Verhältnisses 1 -

A mit 64,9 g Polyisocyanat 3 (70 %ig)

B mit 146,1 g erfindungsgemäßes Polyisocyanat gemäß Beispiel 10 (50 %ig)

versetzt. Beide Lösungen werden auf einen Festkörpergehalt von 60 % eingestellt, indem mit den entsprechenden Mengen Methoxypropanolacetat verdünnt wird.

Durch NCO-Titration wurde nach 10 Stunden bei 80°C (in Lösung) bei A ein Umsatz von 33,7 % d.Th. und bei B ein Umsatz von 70,7 % d.Th. gemessen; die Lösung B ist wesentlich viskoser.

Das Beispiel zeigt die höhere Reaktivität der erfindungsgemäßen Isocyanate.

Verwendungsbeispiel 2

100 g der 30 %igen kationischen Polyurethandispersion gemäß Beispiel 1 der EP 148 392/US-P-4 623 416 werden mit 10 g des erfindungsgemäßen Polyisocyanates gemäß Beispiel 16a gut vermischt. Man erhält eine feinteilige, länger als 24 Stunden stabile Emulsion.

Die klebetechnische Prüfung auf Nora-Testgummi ergibt (nach 7 Tagen) gemäß DIN-53 273 eine Schälfestigkeit von 8,8 kg/cm im Vergleich zu 7,0 kg/cm ohne Zusatz des erfindungsgemäßen Polyisocyanatgemisches.

Verwendungsbeispiel 3

100 g der 30 %igen kationischen Polyurethandispersion gemäß Beispiel 1 der EP 148 392/US-P-4 623 416 werden mit 10 g des erfindungsgemäßen Polyisocyanates gemäß Beispiel 16a gut vermischt. Mit dieser Mischung wird gemäß ASTM 816 D eine Klebung hergestellt. Als zu verklebender Werkstoff diente ein 4 mm dickes PVC-Material mit einem Gehalt von 30 % Dioctylphthalat als Weichmacher.

Vor dem Aufbringen der Klebstoffe wurden die zu klebenden Oberflächen mit Schleifband der Körnung 40 gründlich aufgerauht. Die vom Schleifstaub befreiten Werkstoffe wurden mit einem ca. 0,1 mm dicken Klebstoffschicht versehen. Nach eine Ablüftzeit von 30 Minuten wurden die Klebstoffoberflächen durch Strahlungswärme innerhalb von 3 Sekunden auf eine Temperatur von 80 bis 85°C gebracht. Danach werden die Klebstreifen so zusammengelegt, daß eine überlappte Fläche von 2,5x2,5 cm vorliegt. Die Prüfkörper werden 10 Sekunden mit einem Druck von 0,4 MPa gepreßt.

Zur Ermittlung der Wärmefestigkeit nach ASTM 816 D wurden die jeweils 9 Tage bei Raumtemperatur gelagerten Prüfkörper einem Scherversuch unterworfen. Hierbei wird der Prüfkörper mit einer Masse von 11 kg belastet. Nach 20-minütigem Tempern bei 40°C wird durch Erhöhen der Temperatur pro Minute um 0,25°C die Temperatur ermittelt, bei der die Klebung versagt. Die erreichten Temperaturen betragen mit dem erfindungsgemäßen Polyisocyanat gemäß Beispiel 16: 98°C und ohne Zusatz: 81°C.

**Patentansprüche**

1. Polyisocyanatgemische, gekennzeichnet durch

    a) eine mittlere NCO-Funktionalität von 2,3 bis 4,3,

    b) einen Gehalt an (cyclo)aliphatisch gebundenen Isocyanatgruppen (berechnet als NCO, Molekulargewicht = 42) von 10,0 bis 20,5 Gew.-%,

    c) einen Gehalt an eingebautem, tertiärem Stickstoff von 15 bis 250 Milliäquivalenten pro 100 g,

    d) einen Gehalt an innerhalb von Polyetherketten angeordneten Ethylenoxideinheiten (berechnet als $C_2H_4O$, Molekulargewicht = 44) von 0 bis 15 Gew.-%,

    hergestellt unter Verwendung

    A) einer Polyisocyanatkomponente mit einer (mittleren) NCO-Funktionalität von mindestens 2,1, bestehend aus mindestens einem Polyisocyanat mit ausschließlich (cyclo)aliphatisch gebundenen Isocyanatgruppen und

    B) einer Modifizierungskomponente bestehend aus einer mindestens einen tert. Stickstoff und mindestens einer gegenüber Isocyanaten reaktiven Gruppe enthaltenden Verbindung.

2. Verfahren zur Herstellung der Polyisocyanatgemische gemäß Anspruch 1, dadurch gekennzeichnet, daß man

A) eine Polyisocyanatkomponente mit einer (mittleren) NCO-Funktionalität von mindestens 2,1, bestehend aus mindestens einem Polyisocyanat mit ausschließlich (cyclo)aliphatisch gebundenen Isocyanatgruppen mit

B) einer Modifizierungskomponente bestehend aus einer mindestens einen tert. Stickstoff und mindestens einer gegenüber Isocyanaten reaktiven Gruppe enthaltenden Verbindung
sowie gegebenenfalls

C) einer Polyetheralkohol-Komponente mit einem Gehalt an innerhalb von Polyetherketten eingebauten Ethylenoxideinheiten von mindestens 50 Gew.-%, bestehend aus mindestens einem Polyetheralkohol des Molekulargewichts 350 bis 3500,
und/oder gegebenenfalls

D) weiteren, von den Komponenten B) und C) verschiedenen Polyhydroxylverbindungen,

unter Einhaltung eines NCO/OH-Äquivalentverhältnisses von 2:1 bis 75:1 umsetzt, wobei im übrigen Art und Mengenverhältnisse der genannten Ausgangskomponenten so gewählt werden, daß die resultierenden Umsetzungsprodukte den oben unter a) bis d) genannten Bedingungen entsprechen.

**3.** Verwendung der Polyisocyanatgemische gemäß Anspruch 1, gegebenenfalls in zumindest teilweise alkylierter bzw. protonierter Form als Vernetzer für wasserlösliche oder -dispergierbare Bindemittel oder Bindemittelkomponenten bei der Herstellung von Verklebungen, Überzügen und Beschichtungsmitteln aller Art unter Verwendung von wäßrigen Beschichtungsmitteln auf Basis derartiger Bindemittel oder Bindemittelkomponenten.

## Claims

**1.** Polyisocyanate mixtures, characterised by

a) an average NCO functionality of 2.3 to 4.3,

b) a content of (cyclo)aliphatically bonded isocyanate groups (calculated as NCO, molecular weight = 42) of from 10.0 to 20.5 wt.%,

c) a content of incorporated tertiary nitrogen of from 15 to 250 milliequivalents per 100 g,

d) a content of ethylene oxide units (calculated as $C_2H_4O$, molecular weight = 44) arranged in polyether chains of from 0 to 15 wt.%,

prepared using

A) a polyisocyanate component having an (average) NCO functionality of at least 2.1 and consisting of at least one polyisocyanate containing exclusively (cyclo)aliphatically bonded isocyanate groups and

B) a modifying component consisting of a compound containing at least one tertiary nitrogen and at least one group which is reactive with isocyanates.

**2.** A process for the preparation of polyisocyanate mixtures according to claim 1, characterised in that

A) a polyisocyanate component having an (average) NCO functionality of at least 2.1 and consisting of at least one polyisocyanate containing exclusively (cyclo)aliphatically bonded isocyanate groups
is reacted with

B) a modifying component consisting of a compound containing at least one tertiary nitrogen and at least one group which is reactive with isocyanates
and optionally

C) a polyether alcohol component containing at least 50 wt.% ethylene oxide units incorporated in polyether chains and consisting of at least one polyether alcohol having a molecular weight of 350 to 3500,
and/or optionally

D) other polyhydroxyl compounds different from components B) and C),

an NCO/OH equivalent ratio of 2:1 to 75:1 being maintained, the type and quantitative ratios of the above-mentioned starting components being selected so that the resulting reaction products fulfil the requirements given above under a) to d).

**3.** The use of the polyisocyanate mixtures according to claim 1, optionally in at least partly alkylated or protonated form, as cross-linking agents for water-soluble or water-dispersible binders or binder components in the production of bonds, coatings and coating materials of all kinds using aqueous coating materials based on such binders or binder components.

**Revendications**

**1.** Mélanges de polyisocyanates caractérisés en ce que

a) ils ont une fonctionnalité moyenne en NCO de 2,3 à 4,3,
b) ils ont une teneur en groupes isocyanate à liaisons (cyclo)aliphatiques (exprimée en NCO, poids moléculaire = 42) de 10,0 à 20,5 % en poids,
c) ils ont une teneur en azote tertiaire combiné de 15 à 250 milliéquivalents pour 100 g,
d) ils ont une teneur en motifs d'oxyde d'éthylène appartenant à des chaînes de polyéther (exprimée en $C_2H_4O$, poids moléculaire = 44) de 0 à 15 % en poids,

préparés par utilisation de

A) un composant polyisocyanate à fonctionnalité (moyenne) en NCO d'au moins 2,1 et qui consiste en au moins un polyisocyanate à groupes isocyanate à liaisons exclusivement (cyclo)aliphatiques, et
B) un agent modifiant consistant en un composé qui contient au moins un azote tertiaire et au moins un groupe réactif avec les isocyanates.

**2.** Procédé de préparation des mélanges de polyisocyanates selon la revendication 1, caractérisé en ce que

A) on fait réagir un composant polyisocyanate présentant une fonctionnalité (moyenne) en NCO d'au moins 2,1 et consistant en au moins un polyisocyanate à groupes isocyanate à liaisons exclusivement (cyclo)aliphatiques avec
B) un agent modifiant consistant en un composé qui contient au moins un azote tertiaire et au moins un groupe réactif avec les isocyanates,
et le cas échéant
C) un composant polyétheralcool a une teneur en motifs d'oxyde d'éthylène appartenant à des chaînes de polyéther d'au moins 50 % en poids, et qui consiste en au moins un polyétheralcool de poids moléculaire 350 à 5000,
et/ou le cas échéant
D) des composés polyhydroxylés autres que les composants B) et C),

en respectant un rapport de 2:1 à 75:1 entre les équivalents de NCO et les équivalents d'OH, la nature et les proportions relatives des composants de départ étant par ailleurs choisies en sorte que les produits de réaction obtenus satisfassent aux conditions indiquées ci-dessus sous a) à d).

**3.** Utilisation des mélanges de polyisocyanates selon la revendication 1, le cas échéant à l'état alkylé ou protonisé en partie au moins, en tant qu'agents réticulants pour des liants ou composants de liants solubles ou dispersables dans l'eau lors de la réalisation de collages, l'application de revêtements et la préparation de produits de revêtement de tous types avec utilisation de produits de revêtement aqueux à base de tels liants ou composants de liants.